# EUROPEAN PATENT SPECIFICATION

(11) **EP 3 536 062 B1**
(45) Date of publication and mention of the grant of the patent: **02.12.2020**
(21) Application number: 17788326.1
(22) Date of filing: 11.10.2017
(51) Int. Cl.: H04W 64/00

(54) **METHODS, WIRELESS COMMUNICATION DEVICE AND LOCATION NODE FOR MANAGING A LOCATION REQUEST**
VERFAHREN, DRAHTLOSE KOMMUNIKATIONSVORRICHTUNG UND STANDORTKNOTEN ZUM VERWALTEN EINER POSITIONSANFORDERUNG
PROCÉDÉ, DISPOSITIF DE COMMUNICATION SANS FIL ET NOEUD DE LOCALISATION POUR GÉRER UNE EXIGENCE DE POSITION

(30) Priority: 04.11.2016 US 201662417351 P
(43) Date of publication of application: 11.09.2019
(73) Proprietor: Telefonaktiebolaget LM Ericsson (PUBL), 164 83 Stockholm (SE)
(72) Inventor: JOHANSSON, Nicklas, 590 45 Brokind (SE); ERIKSSON LÖWENMARK, Stefan, 179 98 Färentuna (SE); DIACHINA, John Walter, Garner, NC 27529 (US)
(74) Representative: Ericsson
(86) International application number: PCT/SE2017/051001
(87) International publication number: WO 2018/084764

(56) References cited:
- US-A1- 2003 119 524
- ETSI MCC: "DRAFT Report of 3GPP TSG RAN WG6 meeting #1", 3GPP DRAFT; DRAFT_REPORT_RAN6_1_GOTHENBURG_160826_EOM, 3RD GENERATION PARTNERSHIP PROJECT (3GPP) , vol. TSG RAN, no. Reno, USA; 20161114 - 20161118 26 August 2016 (2016-08-26), XP051138398, Retrieved from the Internet: URL:http://www.3gpp.org/ftp/tsg_ran/WG6_le gacyRAN/TSGR6_01/Report/ [retrieved on 2016-08-26]
- LM ERICSSON: "Multilateration Signaling for GERAN", 3GPP DRAFT; R6-160081 MULTILATERATION SIGNALING FOR GERAN (WAS R6-160018), 3RD GENERATION PARTNERSHIP PROJECT (3GPP) , no. Gothenburg, Sweden; 20160822 - 20160826 25 August 2016 (2016-08-25), XP051143285, Retrieved from the Internet: URL:http://www.3gpp.org/ftp/tsg_ran/WG6_le gacyRAN/TSGR6_01/Docs/ [retrieved on 2016-08-25]
- NOKIA: "Energy efficient hybrid TA/OTD multilateration for neighbour cells in extended coverage", 3GPP DRAFT; R6-160035 ENERGY EFFICIENT HYBRID MULTILATERATION, 3RD GENERATION PARTNERSHIP PROJECT (3GPP) , vol. TSG RAN, no. Gothenburg, Sweden; 20160822 - 20160826 21 August 2016 (2016-08-21), XP051141362, Retrieved from the Internet: URL:http://www.3gpp.org/ftp/Meetings_3GPP_ SYNC/RAN6/Docs/ [retrieved on 2016-08-21]
- NOKIA: "Radio Interface Enhancements for TA based multilateration (Update of RP-160034)", 3GPP DRAFT; R6-160085 ENHANCEMENTS-FOR-TA-BASED-MULTILATERATION_ REVISED, 3RD GENERATION PARTNERSHIP PROJECT (3GPP) , vol. TSG RAN, no. Gothenburg, Sweden; 20160822 - 20160826 26 August 2016 (2016-08-26), XP051143301, Retrieved from the Internet: URL:http://www.3gpp.org/ftp/tsg_ran/WG6_le gacyRAN/TSGR6_01/Docs/ [retrieved on 2016-08-26]
- NOKIA: "Energy Consumption Analysis of Radio Interface Procedures for Positioning Enhancements", 3GPP DRAFT; R6-160086 ENERGY-CONSUMPTION-ANALYSIS-V2, 3RD GENERATION PARTNERSHIP PROJECT (3GPP) , vol. TSG RAN, no. Gothenburg, Sweden; 20160822 - 20160826 25 August 2016 (2016-08-25), XP051143288, Retrieved from the Internet: URL:http://www.3gpp.org/ftp/tsg_ran/WG6_le gacyRAN/TSGR6_01/Docs/ [retrieved on 2016-08-25]

## Description

### TECHNICAL FIELD

Embodiments herein relate to wireless communication systems, such as cellular networks or the like. In particular, a method and a wireless communication device for managing a location request relating to estimation of a location of the wireless communication device by means of multi-lateration in a cellular network as well as a method and a location node for managing a location request relating to estimation of a location of a wireless communication device by means of multi-lateration are disclosed.

### BACKGROUND

For cellular networks, it is known to determine a position of a user device, such as a Mobile Station (MS) or device for short, in the cellular network by means of various methods.

One such method is generally referred to as Timing Advance (TA) multi-lateration. As an example, TA trilateration, as described in RP-161034, positioning enhancements for Global system for mobile communication (GSM) Enhanced Data rates for GSM Evolution (EDGE) Radio Access Network (GERAN) - introducing TA trilateration. RAN#72, relies on establishing a position of a user device, such as a Mobile Station, based on TA values in multiple cells.

TA is a measure of the propagation delay between a Base Transceiver Station (BTS) and a MS, and since the speed by which radio waves travel is known, the distance between the BTS and the MS can be derived. Further, if the TA applicable to a MS is measured within multiple BTSs and the positions of these BTSs are known, the position of the MS can be derived using the measured TA values. Measurement of TA requires that the MS synchronizes to each neighbour BTS and transmits a signal time-aligned with the estimated timing of the downlink channel received from each BTS. The BTS measures the time difference between its own time reference for the downlink channel, and the timing of the received signal (transmitted by the MS). This time difference is equal to two times the propagation delay between the BTS and the MS (one propagation delay of the BTS's synchronization signal sent on the downlink channel to the MS, plus one equal propagation delay of the signal transmitted by the MS back to the BTS).

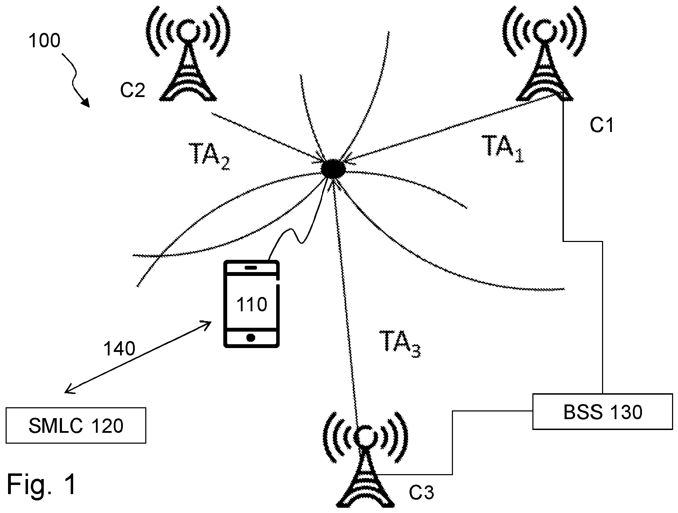

Once the set of TA values are established by the set of one or more BTS used during a given positioning procedure the position of the MS can be derived through so called Multi-lateration where the positions of the MS is determined by the intersection of a set of hyperbolic curves associated with each BTS, see Figure 1. The calculation of the position of the MS is typically carried out by a serving positioning node, such as a Serving Mobile Location Center (SMLC), which implies that all of the derived timing advance and associated BTS position information needs to be sent to the positioning node that initiated the positioning procedure, i.e. the serving positioning node. In some cases a BTS used during a given positioning procedure may be associated with a non-serving positioning node in which case the derived timing advance and associated BTS position information available to that BTS needs to be relayed to the serving positioning node.

### Internet of Things (IoT)

It is expected that in a near future, the population of Cellular loT devices will be very large. Predictions concerning number of devices range from e.g. more than 60000 devices per square kilometer to e.g. 1000000 devices per square kilometer. A large fraction of these devices are expected to be stationary, e.g., gas and electricity meters, vending machines, etc.

Extended Coverage (EC)-GSM-loT and Narrow Band - Internet of Things (NB-loT) are two standards for supporting Cellular loT devices that have been specified by 3GPP TSG GERAN and TSG RAN.

At RAN1#86 a proposal based on an approach, similar to the initially mentioned position based on TA, was made also to support positioning of NB-loT mobiles, such as sensor devices or the like.

Due to limited battery capacity of loT mobiles, the proposed method may not be sufficiently energy efficient.

The document LM ERICSSON: "Multilateration Signaling for GERAN", Gothenburg, Sweden; 20160822 - 20160826 25 August 2016 (2016-08-25), discloses network assisted selection and MS autonomous selection, as two alternatives for LCS signalling procedures for supporting TA based multilateration procedures in a GERAN.

### SUMMARY

An object may be to improve performance of the above mentioned cellular network.

According to an aspect, the object is achieved by a method, performed by a wireless communication device, for managing a location request relating to estimation of a location of the wireless communication device by means of multi-lateration in a cellular network, as defined by independent claim 1.

According to another aspect, the object is achieved by a wireless communication device configured for managing a location request relating to estimation of a location of the wireless communication device by means of multi-lateration in a cellular network, as defined by independent claim 5.

According to a further aspect, the object is achieved by a method, performed by a location node, for managing a location request relating to estimation of a location of a wireless communication device by means of multi-lateration in a cellular network as defined by independent claim 8.

According to a still further aspect, the object is achieved by a location node configured for managing a location request relating to estimation of a location of a wireless communication device by means of multi-lateration in a cellular network as defined by independent claim 12.

Thanks to that the wireless communication device is given information, based on which it can autonomously determine a second set of cells to be used for Multi-lateration, several advantages are achieved. Compared to letting the network determine the set of cells to be used for Multi-lateration, less signaling is required since measurement reports from the wireless communication device would first be needed prior to the network determining the set of cells to be used (i.e. more delay will be experienced and more device battery will be consumed if the network determines the set of cells to be used). Compared to letting the wireless communication device autonomously determine a second set of cells to be used for Multi-lateration without network guidance, co-located cells can be avoided and the accuracy of Multi-lateration thereby improved.

An advantage is hence that overall energy consumption may be reduced, e.g. reduced device battery consumption and/or less signalling which requires less energy) and that accuracy may be improved.

### BRIEF DESCRIPTION OF THE DRAWINGS

The various aspects of embodiments disclosed herein, including particular features and advantages thereof, will be readily understood from the following detailed description and the accompanying drawings, in which Figures 1-8 are provided.

### DETAILED DESCRIPTION

Throughout the following description similar reference numerals have been used to denote similar features, such as nodes, actions, modules, circuits, parts, items, elements, units or the like, when applicable. In the Figures, features that appear in some embodiments are indicated by dashed lines.

For the purpose of simplifying the descriptions provided herein the following definitions may be used:
Foreign BTS: A BTS associated with a Base Station Subsystem (BSS) that uses a positioning node that is different from the positioning node used by the BSS that manages the cell serving the MS when a positioning procedure according to embodiments herein is initiated. In this case the derived timing advance information and identity of the corresponding cell are relayed to the serving positioning node using the core network (i.e. in this case the BSS has no context for the MS).
Local BTS: A BTS associated with a different BSS but still a BSS that uses the same positioning node as the BSS that manages the cell serving the MS when the positioning procedure is initiated. In this case the derived timing advance information and identity of the corresponding cell are relayed to the serving positioning node using the core network (i.e. in this case the BSS has no context for the MS).
Serving BTS: A BTS associated with a BSS that manages the cell serving the MS when the positioning procedure is initiated. In this case the derived timing advance information and identity of the corresponding cell are sent directly to the serving positioning node (i.e. in this case the BSS has a context for the MS).
Serving SMLC node: The SMLC node that commands a MS to perform the Multi-lateration procedure, i.e. it sends a Radio Resource Location Services (LCS) Protocol (RRLP) Multi-lateration Request to the MS.
Serving BSS: The BSS associated with the serving BTS (i.e. the BSS that has context information for a Temporary Logical Link Identifier (TLLI) corresponding to a MS for which the Multi-lateration procedure has been triggered).
Non-serving BSS: A BSS associated with a Foreign BTS (i.e. a BSS that does not have context information for the TLLI corresponding to a MS for which the Multi-lateration procedure has been triggered).

Now returning to **Figure 1****,** an exemplifying **cellular network 100** in which embodiments herein may be implemented is shown. In this example, the cellular network 100 is a GSM network.

In other examples, the cellular network 100 may be any cellular or wireless communication system, such as a Long Term Evolution (LTE), Universal Mobile Telecommunication System (UMTS) and Worldwide Interoperability for Microwave Access (WiMAX) allowing a layer of D2D communications or the like.

The network 100 may be said to comprise a **wireless communication device 110.** This means that the wireless communication device 110 is present in the cellular network 100. The wireless communication device 110 is located at the black point.

Moreover, a **location node 120** is shown in Figure 1. The location node 120 may be a SMLC, E-SMCL or the like.

Furthermore, a **radio network node 130** is shown in Figure 1. The radio network node 130 may be a BSS, a Base Station Controller (BSC), a base station, a radio base station, a Radio Network Controller (RNC) or the like.

The radio network node 130, such as a BSS, may operate one or more cells of the cellular network 100. As an example, the radio network node may operate cells C1, C2 and C3.

The wireless communication device 110 and the location node 120 may **communicate 140** with each other, e.g. via one or more cells even though not explicitly shown in the figure.

As used herein, the term "wireless communication device" may refer to a user equipment, a mobile station, a machine-to-machine (M2M) device, a mobile phone, a cellular phone, a Personal Digital Assistant (PDA) equipped with radio communication capabilities, a smartphone, a laptop or personal computer (PC) equipped with an internal or external mobile broadband modem, a tablet PC with radio communication capabilities, a portable electronic radio communication device, a sensor device equipped with radio communication capabilities or the like. The term "user" may indirectly refer to the term defined in this paragraph. Sometimes, the term "user" may be used to refer to the user equipment or the like as above. It shall be understood that the user may not necessarily involve a human user. The term "user" may also refer to a machine, a software component or the like using certain functions, methods and similar.

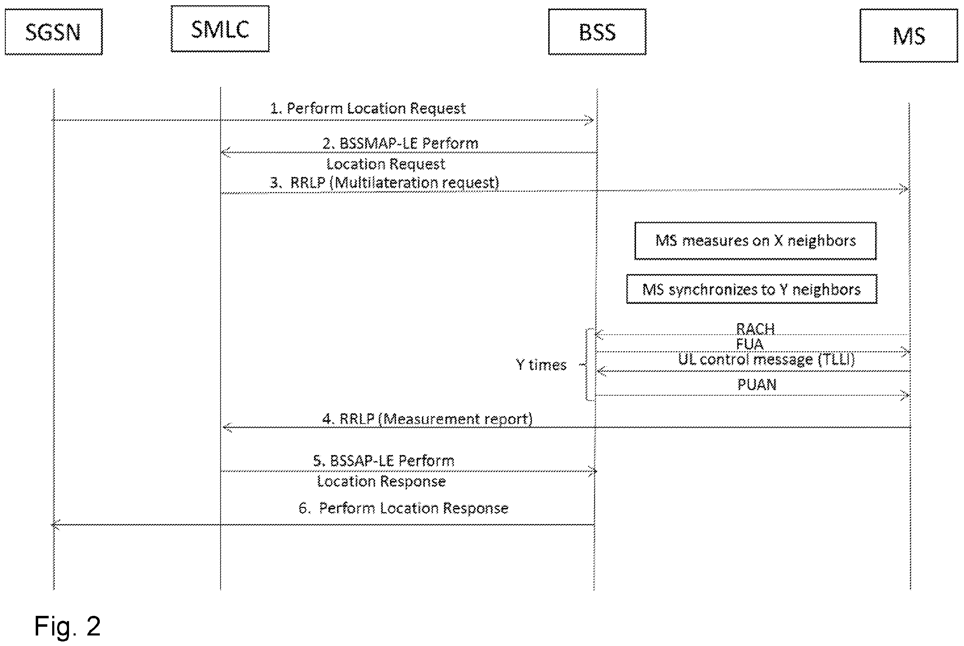

At the RAN6#1 meeting several options regarding the signaling and detailed procedure for the Multi-lateration procedure were discussed. On a high level two options were on the table referred to as Network assisted method and MS autonomous method. In the network assisted method the network decides the base stations to be used for Multi-lateration (based on a measurement report from the MS) while in the MS autonomous method the MS decides the cells to be used based on signal strength [R6-160012]. In **Figure 2** the proposed signaling for the MS autonomous method is illustrated and in step 4 the MS sends the Measurement report which includes cell IDs and associated timing advance values to the SMLC node to be used for calculation of the position. Note that in step 4 the MS sends the Measurement report as an RRLP message carried within an Logical Link Control (LLC) Protocol Data Unit (PDU) sent to the SGSN which extracts the RRLP message from the LLC PDU and relays it to the serving BSS within a BSS General Packet Radio Service (GPRS) Protocol (BSSGP) PDU which then forwards the RRLP message to the serving SMLC (these intermediate steps are not shown in step 4).

One disadvantage with the MS autonomous method is that when the MS autonomously selects base stations based on signal strength is that is doesn't know if the selected base stations are suitable from a positioning perspective or not, e.g., if it selects three cells and two of them happen to be co-sited (also referred to as co-located) then it will not be possible to derive a unique device position. The term "co-sited" means that the cells are located at the same, or substantially the same, geographical location and/or managed by the same BSS. Moreover, from a Broadcast Control CHannel Allocation list (BA list) the wireless communication device 110 doesn't know if cells belong to the serving BSS or to another BSS. The BA list includes frequencies of neighbor cells.

During the meeting several optimizations were also discussed to reduce the power consumption of the wireless communication device 110 [R6-160085] and in this context it would be advantageous to eliminate step 4 in Figure 2 in order to save the energy otherwise needed to transmit this report. This can be achieved by having the BSS collect the timing advance values and send them to the positioning node and this was in fact proposed for the Network assisted method. Another method to reduce the power consumption that was discussed was Connectionless Access burst transmission for TA Estimation via the use of a short ID.

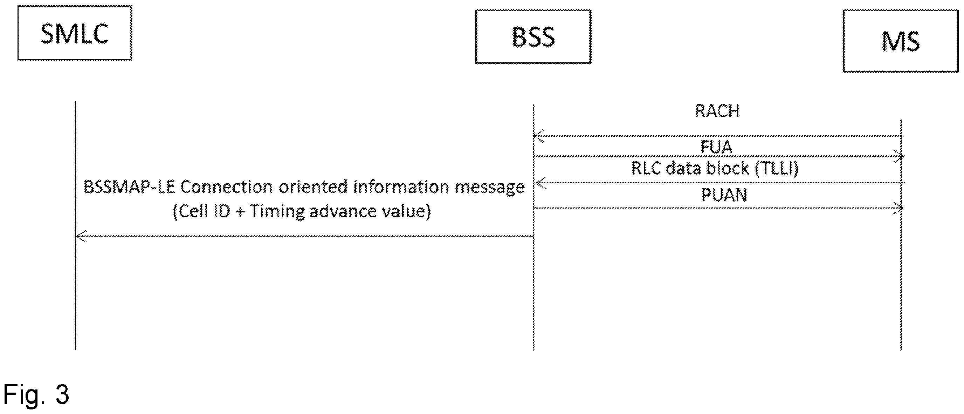

The procedure to determine the timing Advance value and send it to the serving SMLC node, when an uplink transfer of a radio block, such as a Radio Link Control (RLC) data block, on a dedicated resource is used, is illustrated **Figure 3** for a serving BSS and EC-GSM-loT supporting device.

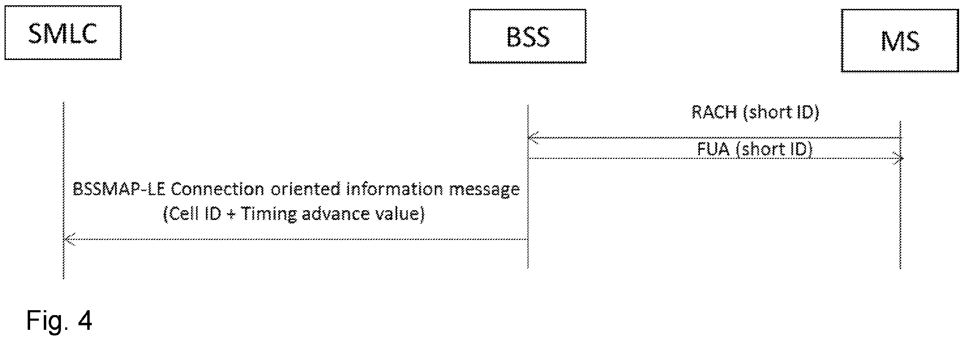

The Connectionless Access burst transmission for TA Estimation procedure for determining the timing Advance value and sending it to the SMLC node is illustrated **Figure 4** for a serving BSS and EC-GSM-loT supporting device, shown as MS. Here the Fixed Uplink Allocation (FUA) message is used to confirm the receipt of the Random Access CHannel (RACH) containing a short ID but does not assign the MS any radio resources (since in this case the MS does not send a RLC data block).

It should be noted that the actual timing advance value estimation is carried out by the BTS and may be performed using only the access burst in the first RACH message or further refined using also the one or more of the four normal bursts used to send the RLC data block carrying the TLLI on the uplink radio resources assigned by the FUA message.

Some problems with the methods as described above, i.e. the Network Assisted method and MS Autonomous method, are that:
(a) for the Network Assisted method the energy consumption is unnecessarily high due to the requirement to send a measurement report to the network, i.e. a RRLP message sent from the MS to the serving SMLC in response to the RRLP sent to the MS to trigger Multi-lateration, and
(b) for the MS Autonomous method the positioning accuracy may not be as accurate as the Network assisted method since the MS is unaware of cell geometry (e.g. it does not know which cells are co-located) and may therefore provide the SMLC with less useful information when using the MS Autonomous method.

In order to achieve improved accuracy as compared to the MS Autonomous method as well as reducing the MS energy consumption penalty associated with the Network Assisted method, methods in a wireless communication device 110 and a location node as described herein are proposed. The embodiments herein may sometimes be referred to as the "MS autonomous with network guidance Multi-lateration" method or interchangeably "Multi-lateration procedure".

The embodiments herein propose one or more of the following features:
- the network provides the MS with information in the triggering RRLP Multi-lateration Request message that indicates a set of cells that the MS can use when performing the "MS autonomous with network guidance Multi-lateration" method,
- the information may include an indication of which candidate cells are co-sited, or co-located, thereby allowing a MS to avoid including co-sited cells within the set of cells it chooses to use for performing the "MS autonomous with network guidance Multi-lateration" method; this allows for sending a RRLP message, which identifies 1) a set of cells that the MS can use (i.e. cells that are not co-sited unless otherwise indicated), and optionally 2) one or more sets of co-sited cells wherein each set identifies cells that are not co-sited with the serving cell (i.e. the cell in which the MS receives the command to perform a positioning procedure using the "MS autonomous with network guidance Multi-lateration" method), and optionally 3) one set of co-sited cells identifying cells that are co-sited with the serving cell.
- the MS has full autonomy regarding the set of cells to use when triggered to perform the "MS autonomous with network guidance Multi-lateration" method (i.e. it may use a combination of cells it independently identifies to be useful for positioning determination as well as any subset of cells identified by the information received in the RRLP Multi-lateration Request message),
- the MS does not send a RRLP message in response to receiving the RRLP message sent by the serving SMLC to trigger this new Multi-lateration method,
- the MS transmits an RLC data block in each cell it chooses to use for performing this new Multi-lateration method (i.e. in addition to an access request it sends on the RACH or EC-RACH) unless otherwise indicated by information provided in the RRLP message sent by the serving SMLC to trigger this new Multi-lateration method, and
- The information may include a short ID and a list of cells in which the short ID may be used thereby allowing the MS to skip the transmission of an RLC data block in those cells, thereby resulting in a battery saving.

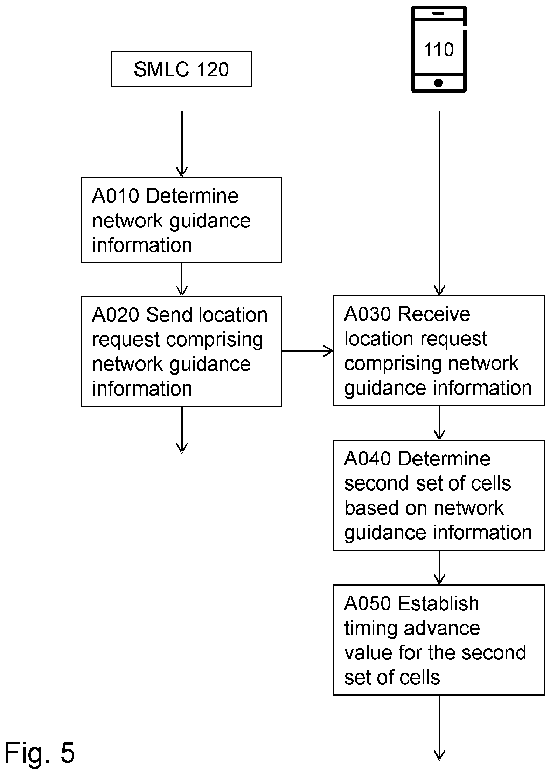

**Figure 5** illustrates an exemplifying method according to embodiments herein when implemented in the network 100 of Figure 1.

The wireless communication device 110 performs a method for managing a location request relating to estimation of a location of the wireless communication device 110 by means of multi-lateration in the cellular network 100, comprising cells. The location node 120 performs a method for managing a location request relating to estimation of a location of the wireless communication device 110 by means of multi-lateration in the cellular network 100.

After the brief description of the actions, detailed examples of some exemplifying embodiments relating to the information are provided. The information may be referred to as network guidance information.

One or more of the following actions may be performed in any suitable order.

### Action A010

The location node 120 determines information, wherein the information indicates a first set of cells useable by the wireless communication device 110 when establishing timing advance values.

The information may indicate which cells of the first set of cells are co-located.

### Action A020

The location node 120 sends the location request (RRLP message), comprising a request to perform a location procedure using the "MS autonomous with network guidance Multi-lateration" method and the information, to the wireless communication device 110.

This action, and action A030 below, may be similar to step 3 in Figure 2, but it shall be noted that the location request as described here in action A020 further comprises the information as compared to the location request of step 3.

### Action A030

The wireless communication device 110 receives, from the location node 120, the location request, comprising a request to perform a location procedure using the "MS autonomous with network guidance Multi-lateration" method and the information. The information indicates the first set of cells usable by the wireless communication device 110 when establishing timing advance values.

### Action A040

The wireless communication device 110 determines a second set of cells based on the information. The wireless communication device 110 may also determine any additional cells for which the wireless communication device 110 determines it should establish timing advance information for estimating its location. This means that the wireless communication device 110 determines any additional cells for which timing advance values should be established, such as acquired.

The second set of cells may comprise at least one cell of the first set of cells. The second set of cells may also comprise said any additional cells.

### Action A050

The wireless communication device 110 performs the location procedure using the "MS autonomous with network guidance Multi-lateration" method and thereby allows the network to establish the timing advance values for the second set of cells.

In the following, embodiments herein are illustrated by exemplary embodiments. It should be noted that these embodiments are not mutually exclusive. Components from one embodiment may be tacitly assumed to be present in another embodiment and it will be obvious to a person skilled in the art how those components may be used in the other exemplary embodiments.

Embodiments below will be exemplified with GSM/EDGE as the communications network. The core network node will be exemplified with an SGSN, but generally it may be another core network node serving the communication device 110 as well. For example for NB-loT the applicable core network node may also be an MME. The radio access network node (controller node) is exemplified with a BSS and the communication device 110 will be exemplified with a wireless communication device, sometimes also referred to as the device. The positioning node will be exemplified with an SMLC node but may, e.g., for NB-loT be an E-SMLC node.

In a first embodiment the objective (i.e. improving the accuracy of the MS Autonomous method as well as reducing the MS energy consumption penalty associated with the Network Assisted method) is achieved, using the serving cell of the MS as reference, by ensuring the proposed RRLP Multi-lateration Request message includes information. This provides information to the MS about the neighboring cells it can safely use to perform the location procedure using the "MS autonomous with network guidance Multi-lateration" method and indicates which cells are co-sited. This may be achieved by 1) grouping the cells in sets wherein the cells in each set are not co-located with the serving cell but are co-located with each other and MS may only use one of the cells in each set for the Multi-lateration procedure (see Example 1 below) and 2) grouping all cells that are co-located with the serving cell. These cells are thus not used by the MS during multi-lateration.

See example below where each cell is identified using the Absolute Radio Frequency Channel Number (ARFCN) and where 3 cells are provided in each of the three sets. Using ARCN is only provided as an example, other ways of identifying each cell are known in the art. For example, Set 1 could identify cells that are co-located with the serving cell whereas Set 2 and Set 3 could identify cells that are not co-located with the serving cell but are co-located with each other. If Set 2 only contains 1 cell then the MS will know it can safely use that cell for performing the location/positioning procedure.

### Example 1:

| | |
|---|---|
| Set 1: | ARFCN 1: <10 bits> |
| | ARFCN 2: <10 bits> |
| | ARFCN 3: <10 bits> |
| Set 2: | ARFCN 4: <10 bits> |
| | ARFCN 5: <10 bits> |
| | ARFCN 6: <10 bits> |
| Set 3: | ARFCN 7: <10 bits> |
| | ARFCN 8: <10 bits> |
| | ARFCN 9: <10 bits> |

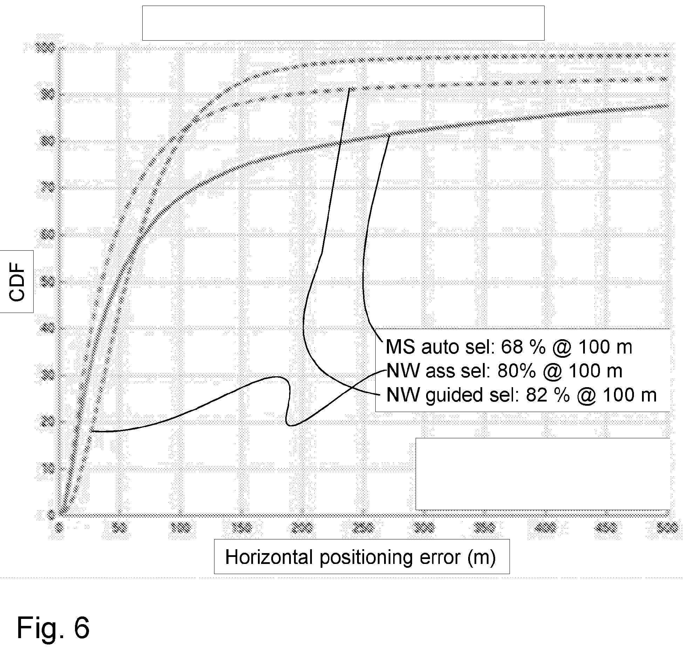

An advantage is that overall energy consumption may be reduced when comparing with the Network Assisted method (as mentioned in the background section) and that accuracy may be improved when comparing with the MS autonomous method. This is supported by Figure 6.

Figure 6 shows simulated performance of the "MS Autonomous" method, the "NW Assisted" method and the first embodiment of the "MS Autonomous with NW Guidance" method. The figure shows the Cumulative Distribution Function (CDF) of the positioning error. It can be seen that the objective of improving the accuracy compared to the "MS Autonomous" method is met.

In a second embodiment the objective is achieved, using the serving cell of the MS as reference, by ensuring the proposed RRLP Multi-lateration Request message includes additional information such as the Short ID as well as an indication in which cell sets the use of the short ID may be used, see example 2. This means that the information may comprise a device specific identification (referred to as a Short ID) to be used in access requests sent by the wireless communication device 110 to a network node wherein the access request may be used by the network node for timing advance estimation, and wherein each sub-set may comprise an indication about whether or not the device specific identification is allowed to be used for the cells of said each sub-set. The device specific identification may be a wireless communication device specific identification, a mobile station specific identification or the like.

This is especially useful when a cell set belongs to another BSS and when the MS must convey the Source Identity of the serving cell to the BSS in the uplink RLC data block, see Figure 3, in order for the non-serving BSS to know where to forward the estimated Timing Advance value. Another scenario where this may be useful is when there are hardware limitations in the BTS belonging to certain cell sets that require that the MS also transmits the uplink RLC data block for the BTS to make a sufficiently accurate Timing Advance Estimation. In such scenarios the indication may be needed on a per cell level and not on per cell set level as illustrated in the example.

An advantage with having the SMLC node assign the short ID in the RRLP Multi-lateration Request message is that it avoids modifications of existing assignment messages/introduction of a new control message just for this purpose. Another advantage is that the SMLC could provide the non-serving BSSs with this short ID (e.g. via the serving BSS and a modified RIM procedure using the RAN-INFORMATION

### REQUEST PDU)

### Example 2:

| | |
|---|---|
| Short ID: <8bits> | ; assuming an 8 bit identity, |

| | |
|---|---|
| Set 1: | Short ID allowed: Yes (optional) |
| | ARFCN 1: <10 bits> |
| | ARFCN 2: <10 bits> |
| | ARFCN 3: <10 bits> |
| | |
| Set 2: | Short ID allowed: Yes (optional) |
| | ARFCN 4: <10 bits> |
| | ARFCN 5: <10 bits> |
| | ARFCN 6: <10 bits> |
| | |
| Set 3: | Short ID allowed: No (optional) |
| | ARFCN 7: <10 bits> |
| | ARFCN 8: <10 bits> |
| | ARFCN 9: <10 bits> |

Furthermore, according to the second embodiment, by providing information in the RRLP Multi-lateration Request message, e.g. sent to the MS to trigger the positioning procedure, that includes a short ID the SMLC can effectively indicate that a further optimized version of the "MS autonomous with network guidance Multi-lateration" method is to be used. In this case the MS is assigned a short ID to be used for performing the "MS autonomous with network guidance Multi-lateration" method wherein the MS uses the short ID in the access request sent on the RACH/EC-RACH and receives a confirmation of the access request on the AGCH. This obviates the need for the MS to send a RLC data block in each cell it determines to use for performing the "MS autonomous with network guidance Multi-lateration" method, thereby resulting in reduced battery consumption.

In a third embodiment the objective is achieved, using the serving cell of the MS as reference, by ensuring the proposed RRLP Multi-lateration Request message includes further additional information such as a Quality of Service Indication. This means that the information may comprise an indication about quality of service relating to the estimation of the location of the wireless communication device 110.

This is useful when the network wants to indicate to the MS the desired Quality of Service to serve as guidance to the MS when selecting cells for the actual Multi-lateration procedure (i.e. when determining the second set of cells referenced in the Summary above), see example below where the serving SMLC provides 5 sets of cells and where the Quality of Service (QoS) field may indicate that only three sets are needed for the desired accuracy. It may be so that even if 5 sets of cells are provided by the serving SMLC node that the pathloss is larger in a particular direction so that the MS can't access any of the cells in a given set.

### Example 3:

| | |
|---|---|
| QoS: <3 bits> | ; assuming a 3 bit field, |
| Short ID: <8bits> | ; assuming an 8 bit identity, |

| | |
|---|---|
| Set 1: | Short ID allowed: Yes (optional) |
| | ARFCN 1: <10 bits> |
| | ARFCN 2: <10 bits> |
| | ARFCN 3: <10 bits> |
| | |
| Set 2: | Short ID allowed: Yes (optional) |
| | ARFCN 4: <10 bits> |
| | ARFCN 5: <10 bits> |
| | ARFCN 6: <10 bits> |
| | |
| Set 3: | Short ID allowed: No (optional) |
| | ARFCN 7: <10 bits> |
| | ARFCN 8: <10 bits> |
| | ARFCN 9: <10 bits> |
| | |
| Set 4: | Short ID allowed: yes (optional) |
| | ARFCN 10: <10 bits> |
| | ARFCN 11: <10 bits> |
| | ARFCN 12: <10 bits> |
| | |
| Set 5: | Short ID allowed: No (optional) |
| | ARFCN 13: <10 bits> |
| | ARFCN 14: <10 bits> |
| | ARFCN 15: <10 bits> |

In a fourth embodiment the objective is achieved, using the serving cell of the MS as reference, by ensuring the proposed RRLP Multi-lateration Request message includes additional information such as desired MS sync accuracy. This means that the information may comprise an indication about synchronization accuracy required of the wireless communication device 110 when performing multi-lateration.

This may be useful when the network wishes to indicate to the MS the desired synchronization accuracy in order for the overall procedure to meet a certain positioning accuracy. Note that the MS synchronization accuracy may also be per cell set or cell level e.g. when a higher MS synchronization accuracy is desired to compensate for lower accuracy in the BTS timing advance estimation. If a MS determines that it cannot realize the indicated synchronization accuracy it may abort the Multi-lateration procedure in which case it sends the serving SMLC a response RRLP message indicating it was unable to perform the requested positioning function and indicating the synchronization accuracy that it is able to support.

### Example 4:

| | |
|---|---|
| QoS: <3 bits> | ; assuming a 3 bit field, |
| MS sync accuracy: <4 bits> | ; assuming 4 bit field |
| Short ID: <8bits> | ; assuming an 8 bit identity, |

| | |
|---|---|
| Set 1: | Short ID allowed: Yes |
| | ARFCN 1: <10 bits> |
| | ARFCN 2: <10 bits> |
| | ARFCN 3: <10 bits> |
| | |
| Set 2: | Short ID allowed: Yes |
| | ARFCN 4: <10 bits> |
| | ARFCN 5: <10 bits> |
| | ARFCN 6: <10 bits> |
| | |
| Set 3: | Short ID allowed: No |
| | ARFCN 7: <10 bits> |
| | ARFCN 8: <10 bits> |
| | ARFCN 9: <10 bits> |
| | |
| Set 4: | Short ID allowed: yes |
| | ARFCN 10: <10 bits> |
| | ARFCN 11: <10 bits> |
| | ARFCN 12: <10 bits> |
| | |
| Set 5: | Short ID allowed: No |
| | ARFCN 13: <10 bits> |
| | ARFCN 14: <10 bits> |
| | ARFCN 15: <10 bits> |

In a fifth embodiment the objective is achieved, using the serving cell of the MS as reference, by arranging the additional information to be included in the proposed RRLP Multi-lateration Request message in such a way that the MS can optimize the selection of cells/cell sets identified by the guidance information. This means that the sub-sets of each set may be arranged in order such that a first sub-set in a certain position of a first set, e.g. sub-set 2 of the first set as shown below, corresponds to a second sub-set in the same position, i.e. in the certain position in a second set, e.g. subset 2 of the second set as shown below.

Expressed differently in relation to the first set of cell mentioned in action A010, the first set of cells may comprise sub-sets of cells as already mentioned. Then, according to the fifth embodiment, the sub-sets of the first set may be arranged into a plurality of groups, where sub-sets in each group may be arranged in order such that a first sub-set in a first position of a first group corresponds to a second sub-set in the same first position of a second group, wherein the plurality of groups comprises the first and second groups.

This can e.g. be achieved by grouping the three sub-sets within each set such that if for some reason none of the cells in sub-set 1 of the first set of three can be used by the MS then the MS knows that cell 10, 11 or 12 in sub-set 1 of the next set of three sub-sets of cells could be used as replacement.

### Example:

First set of three sub-sets of cells
1,2,3, (sub-set 1)
4,5,6, (sub-set 2)
7,8,9 (sub-set 3)

Second set of three sub-sets of cells
10,11,12 (sub-set 1)
13,14,15 (sub-set 2)
15,17,18 (sub-set 3)

Assume that the cell in the sets above are geographically located such that if MS selects one cell in each sub-set of the first set. Say cell 1, 5 and 9 then the SMLC node will be able to determine the position with good accuracy.

If however the MS can't read any of the cells in sub-set 2, i.e., cells 4,5,6 then it needs to select one additional cell from the second set of three sub-sets of cells. If these are not ordered with respect to first set then the MS has no idea which one to try/use. It could e.g. be so that the set consisting of 10, 11 and 12 are more or less in the same direction as set consisting of 1, 2 and 3 implying that selecting one of these cells is almost as bad as selecting a co-sited cell. Instead, it would, with suitable ordering, be preferred to select a cell from among cells 13, 14, 15 (i.e. sub-set 2 which is in the same ordered sub-set as cell 4 of the first set).

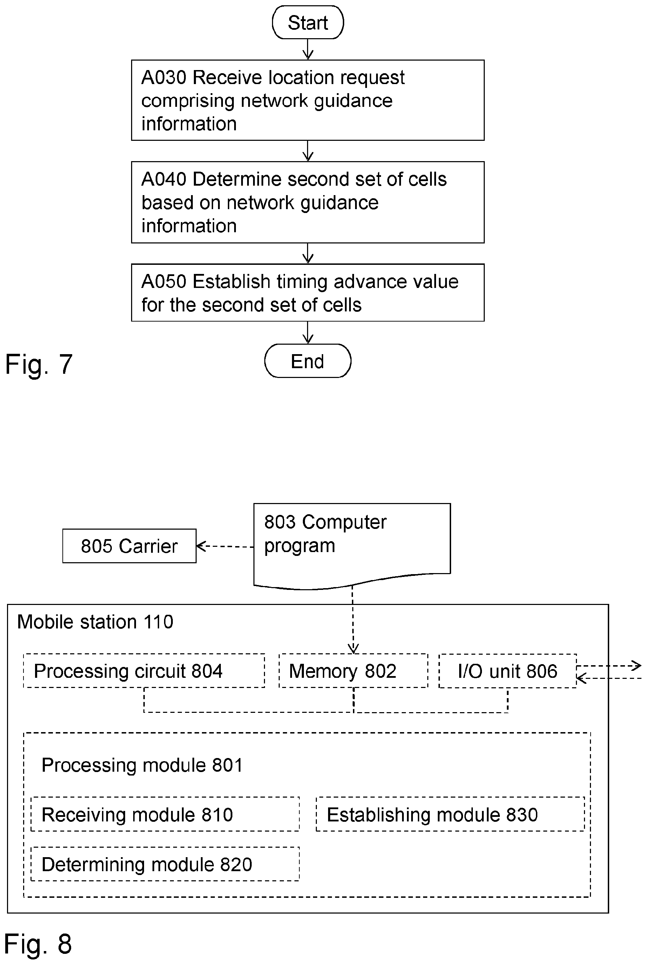

In **Figure 7****,** a schematic flowchart of exemplifying methods in the wireless communication device 110 is shown. Again, the same reference numerals as above have been used to denote the same or similar features, in particular the same reference numerals have been used to denote the same or similar actions. Accordingly, the wireless communication device 110 performs a method for managing a location request.

As mentioned, the second set of cells may comprise at least one cell of the first set of cells. The information may indicate which cells of the first set of cells are co-located. The first set of cells may comprise sub-sets of cells, wherein one sub-set may comprise cells that are co-located with the serving cell and the additional sub-sets may comprise cells that are not co-located with the serving but are co-located with other cells in that set. The information may comprise a device specific identification to be used in access requests sent by the wireless communication device 110 to a network node wherein the access request may be used by the network node for timing advance estimation, and wherein each sub-set may comprise an indication about whether or not the identification is allowed to be used for the cells of said each sub-set. The information may comprise an indication about quality of service relating to the estimation of the location of the wireless communication device 110. The information may comprise an indication about synchronization accuracy required of the wireless communication device 110 when performing multi-lateration.

One or more of the following actions may be performed in any suitable order.

### Action A030

The wireless communication device 110 receives, from the location node 120, the location request, comprising the information. The information indicates the first set of cells usable by the wireless communication device 110 when establishing timing advance values.

### Action A040

The wireless communication device 110 determines a second set of cells based on the information.

The second set of cells may comprise at least one cell of the first set of cells.

### Action A050

The wireless communication device 110 performs a method for managing a location request using the second set of cells thereby allowing the network to establish timing advance values for the second set of cells.

With reference to **Figure 8****,** a schematic block diagram of embodiments of the wireless communication device 110 of Figure 1 is shown.

The wireless communication device 110 may comprise **a processing module 801,** such as a means for performing the methods described herein. The means may be embodied in the form of one or more hardware modules and/or one or more software modules

The wireless communication device 110 may further comprise **a memory 802.** The memory may comprise, such as contain or store, instructions, e.g. in the form of **a computer program 803,** which may comprise computer readable code units.

According to some embodiments herein, the wireless communication device 110 and/or the processing module 801 comprises **a processing circuit 804** as an exemplifying hardware module, which may comprise one or more processors. Accordingly, the processing module 801 may be embodied in the form of, or 'realized by', the processing circuit 804. The instructions may be executable by the processing circuit 804, whereby the wireless communication device 110 is operative to perform the methods of Figure 5 and/or Figure 7. As another example, the instructions, when executed by the wireless communication device 110 and/or the processing circuit 804, may cause the wireless communication device 110 to perform the method according to Figure 5 and/or 7.

In view of the above, in one example, there is provided a wireless communication device 110 for managing a location request. Again, the memory 802 contains the instructions executable by said processing circuit 804 whereby the wireless communication device 110 is operative for:
receiving, from the location node 120, the location request, including information, wherein the information indicates a first set of cells usable by the wireless communication device 110 when establishing timing advance values,
determining a second set of cells based on the information, and
performs a method for managing a location request according to the received location request using the second set of cells thereby allowing the network to establish the timing advance values for the second set of cells.

Figure 8 further illustrates a **carrier 805,** or program carrier, which comprises the computer program 803 as described directly above.

In some embodiments, the wireless communication device 110 and/or the processing module 801 may comprise one or more of **a receiving module 810, a determining module 820,** and **an establishing module 830** as exemplifying hardware modules. In other examples, one or more of the aforementioned exemplifying hardware modules may be implemented as one or more software modules.

Moreover, the processing module 801 comprises **an Input/Output unit 806,** which may be exemplified by **the receiving module and/or a sending module** as described when applicable.

Accordingly, the wireless communication device 110 is configured for managing a location request relating to estimation of a location of the wireless communication device 110 by means of multi-lateration in a cellular network 100, comprising cells.

Therefore, according to the various embodiments described above, the wireless communication device 110 and/or the processing module 801 and/or the receiving module 810 is configured for receiving, from a location node 120, the location request, including information, wherein the information indicates a first set of cells usable by the wireless communication device 110 when establishing timing advance values.

Moreover, the wireless communication device 110 and/or the processing module 801 and/or the determining module 820 is configured for determining a second set of cells based on the information.

Furthermore, the wireless communication device 110 and/or the processing module 801 and/or the establishing module 830 is configured for performing a method for managing a location request according to the received location request using the determined second set of cells thereby allowing the network to establish the timing advance values for the second set of cells.

As mentioned, the second set of cells may comprise at least one cell of the first set of cells. The information may indicate which cells of the first set of cells are co-located. The first set of cells may comprise sub-sets of cells, wherein each sub-set may comprise cells that are co-located. The information may comprise a device specific identification to be used in access requests sent by the wireless communication device 110 to a network node wherein the access request may be used by the network node for timing advance estimation, and wherein each sub-set may comprise an indication about whether or not the identification is allowed to be used for the cells of said each sub-set. The information may comprise an indication about quality of service relating to the estimation of the location of the wireless communication device 110. The information may comprise an indication about synchronization accuracy required of the wireless communication device 110 when performing multi-lateration.

Furthermore, as mentioned, the wireless communication device 110 and/or the processing module 801 and/or the determining module 802 may be configured for determining the second set of cells by determining any additional cells for which timing advance values should be established.

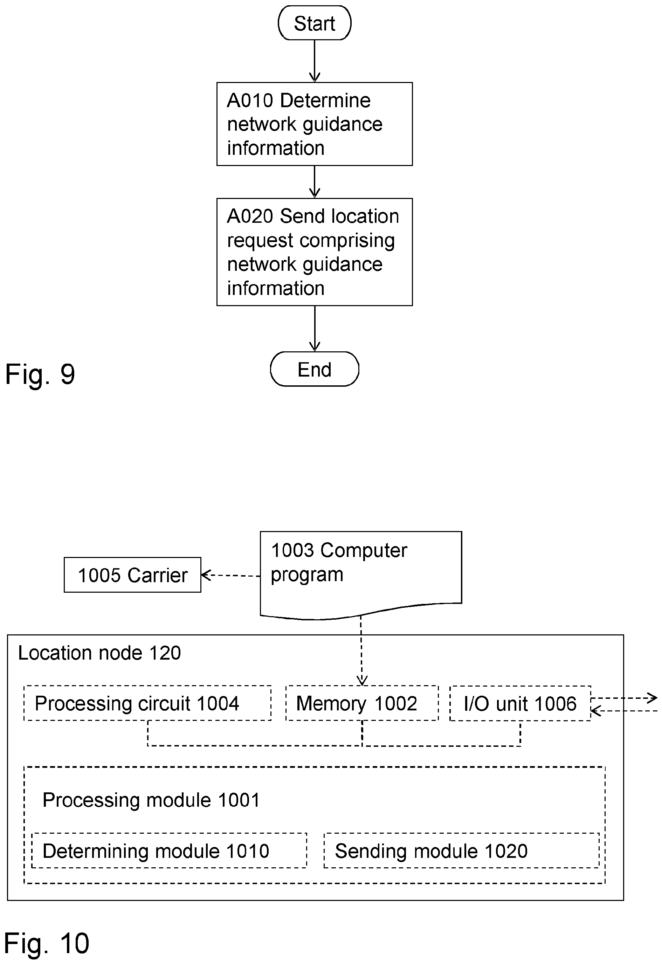

In **Figure 9****,** a schematic flowchart of exemplifying methods in the location node 120 is shown. Again, the same reference numerals as above have been used to denote the same or similar features, in particular the same reference numerals have been used to denote the same or similar actions. Accordingly, the location node 120 performs a method for managing a location request.

As mentioned, the second set of cells may comprise at least one cell of the first set of cells. The information may indicate which cells of the first set of cells are co-located. The first set of cells may comprise sub-sets of cells, wherein each sub-set may comprise cells that are co-located. The information may comprise a device specific identification to be used in access requests sent by the wireless communication device 110 to a network node wherein the access request may be used by the network node for timing advance estimation, and wherein each sub-set may comprise an indication about whether or not the identification is allowed to be used for the cells of said each sub-set. The information may comprise an indication about quality of service relating to the estimation of the location of the wireless communication device 110. The information may comprise an indication about synchronization accuracy required of the wireless communication device 110 when performing multi-lateration.

One or more of the following actions may be performed in any suitable order.

### Action A010

The location node 120 determines information, wherein the information indicates a first set of cells useable by the wireless communication device 110 when performing a location procedure that allows the network to establish timing advance values.

The information may indicate which cells of the first set of cells are co-located.

### Action A020

The location node 120 sends the location request, comprising the information, to the wireless communication device 110.

With reference to **Figure 10****,** a schematic block diagram of embodiments of the location node 120 of Figure 1 is shown.

The location node 120 may comprise **a processing module 1001,** such as a means for performing the methods described herein. The means may be embodied in the form of one or more hardware modules and/or one or more software modules

The location node 120 may further comprise **a memory 1002.** The memory may comprise, such as contain or store, instructions, e.g. in the form of a **computer program 1003,** which may comprise computer readable code units.

According to some embodiments herein, the location node 120 and/or the processing module 1001 comprises a **processing circuit 1004** as an exemplifying hardware module. Accordingly, the processing module 1001 may be embodied in the form of, or 'realized by', the processing circuit 1004. The instructions may be executable by the processing circuit 1004, whereby the location node 120 is operative to perform the methods of Figure 5 and/or Figure 9. As another example, the instructions, when executed by the location node 120 and/or the processing circuit 1004, may cause the location node 120 to perform the method according to Figure 5 and/or Figure 9.

In view of the above, in one example, there is provided a location node 120 for managing a location request relating to estimation of a location of a wireless communication device 110 by means of multi-lateration in a cellular network 100 comprising cells. Again, the memory 1002 contains the instructions executable by said processing circuit 1004 whereby the location node 120 is operative for:
determining information, wherein the information indicates a first set of cells useable by the wireless communication device 110 when establishing timing advance values; and
sending, to the wireless communication device 110, the location request, including the information.

Figure 10 further illustrates **a carrier 1005,** or program carrier, which comprises the computer program 1003 as described directly above.

In some embodiments, the processing module 1001 comprises **an Input/Output unit 1006,** which may be exemplified by a receiving module and/or a sending module as described below when applicable.

In further embodiments, the location node 120 and/or the processing module 1001 may comprise one or more of **a determining module 1010,** and **a sending module 1020** as exemplifying hardware modules. In other examples, one or more of the aforementioned exemplifying hardware modules may be implemented as one or more software modules.

Accordingly, the location node 120 is configured for managing a location request relating to estimation of a location of a wireless communication device 110 by means of multi-lateration in a cellular network 100 comprising cells.

Therefore, according to the various embodiments described above, the location node 120 and/or the processing module 1001 and/or the determining module 1010 is configured for determining information, wherein the information indicates a first set of cells useable by the wireless communication device 110 when establishing timing advance values.

Furthermore, the location node 120 and/or the processing module 1001 and/or the sending module 1020 is configured for sending, to the wireless communication device 110, the location request, including the information.

As mentioned, the second set of cells may comprise at least one cell of the first set of cells. The information may indicate which cells of the first set of cells are co-located. The first set of cells may comprise sub-sets of cells, wherein each sub-set may comprise cells that are co-located. The information may comprise a device specific identification to be used in access requests sent by the wireless communication device 110 to a network node wherein the access request may be used by the network node for timing advance estimation, and wherein each sub-set may comprise an indication about whether or not the identification is allowed to be used for the cells of said each sub-set. The information may comprise an indication about quality of service relating to the estimation of the location of the wireless communication device 110. The information may comprise an indication about synchronization accuracy required of the wireless communication device 110 when performing multi-lateration.

As used herein, the term "node", or "network node", may refer to one or more physical entities, such as devices, apparatuses, computers, servers or the like. This may mean that embodiments herein may be implemented in one physical entity. Alternatively, the embodiments herein may be implemented in a plurality of physical entities, such as an arrangement comprising said one or more physical entities, i.e. the embodiments may be implemented in a distributed manner, such as on a set of server machines of a cloud system.

As used herein, the term "module" may refer to one or more functional modules, each of which may be implemented as one or more hardware modules and/or one or more software modules and/or a combined software/hardware module in a node. In some examples, the module may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing module" may include one or more hardware modules, one or more software modules or a combination thereof. Any such module, be it a hardware, software or a combined hardware-software module, may be a determining means, estimating means, capturing means, associating means, comparing means, identification means, selecting means, receiving means, sending means or the like as disclosed herein. As an example, the expression "means" may be a module corresponding to the modules listed above in conjunction with the Figures.

As used herein, the term "software module" may refer to a software application, a Dynamic Link Library (DLL), a software component, a software object, an object according to Component Object Model (COM), a software component, a software function, a software engine, an executable binary software file or the like.

The terms "processing module" or "processing circuit" may herein encompass a processing unit, comprising e.g. one or more processors, an Application Specific integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

As used herein, the expression "transmit" and "send" are considered to be interchangeable. These expressions include transmission by broadcasting, uni-casting, group-casting and the like. In this context, a transmission by broadcasting may be received and decoded by any authorized device within range. In case of uni-casting, one specifically addressed device may receive and decode the transmission. In case of group-casting, a group of specifically addressed devices may receive and decode the transmission.

As used herein, the terms "number" and/or "value" may be any kind of digit, such as binary, real, imaginary or rational number or the like. Moreover, "number" and/or "value" may be one or more characters, such as a letter or a string of letters. "Number" and/or "value" may also be represented by a string of bits, i.e. zeros and/or ones.

As used herein, the term "set of' may refer to one or more of something. E.g. a set of devices may refer to one or more devices, a set of parameters may refer to one or more parameters or the like according to the embodiments herein.

As used herein, the expression "in some embodiments" has been used to indicate that the features of the embodiment described may be combined with any other embodiment disclosed herein.

## Claims

1. A method, performed by a wireless communication device (110), for managing a location request relating to estimation of a location of the wireless communication device (110) by means of multi-lateration in a cellular network (100), comprising cells, wherein the method comprises:
receiving (A030), from a location node (120), the location request, including information indicating a first set of cells usable by the wireless communication device (110) when establishing timing advance values,**characterised by**:
wherein the first set of cells
comprises sub-sets of cells, wherein one sub-set comprises cells that are co-located with the serving cell and all other sub-sets comprise cells that are not co-located with the serving cell but are co-located with other cells in that set, and wherein the information comprises a device specific identification to be used in access requests sent by the wireless communication device (110) to a network node, wherein the access request is used by the network node for timing advance estimation, and
wherein each sub-set comprises an indication about whether or not the identification is allowed to be used for the cells of said each sub-set,
determining (A040) a second set of cells based on the information, wherein determining a second set of cells based on the information comprises selecting cells that are not co-located, and
establishing (A050) the timing advance values for the second set of cells.

2. The method according to claim 1, wherein the determining of the second set of cells comprises determining any additional cells for which timing advance values should be established.

3. The method according to claims 1 or 2, wherein the information indicates which cells of the first set of cells are co-located.

4. The method according to any one of the preceding claims, wherein the information comprises an indication about quality of service relating to the estimation of the location of the wireless communication device (110).

5. A method, performed by a location node (120), for managing a location request relating to estimation of a location of a wireless communication device (110) by means of multi-lateration in a cellular network (100) comprising cells, wherein the method comprises:
determining (A010) information indicating a first set of cells useable by the wireless communication device (110) when establishing timing advance values, **characterised by**:
wherein the first set of cells comprises sub-sets of cells, wherein one sub-set comprises cells that are co-located with the serving cell and all other sub-sets comprise cells that are not co-located with the serving cell but are co-located with other cells in that set, and wherein the information comprises a device specific identification to be used in access requests sent by the wireless communication device (110) to a network node wherein the access request is used by the network node for timing advance estimation, and wherein each sub-set comprises an indication about whether or not the identification is allowed to be used for the cells of said each sub-set; and
sending (A020), to the wireless communication device (110), the location request, including the information.

6. The method according to claim 5, wherein the information indicates which cells of the first set of cells are co-located.

7. The method according to any one of claims 5-6, wherein the information comprises an indication about quality of service relating to the estimation of the location of the wireless communication device (110).

8. A wireless communication device (110) configured for managing a location request relating to estimation of a location of the wireless communication device (110) by means of multi-lateration in a cellular network (100), comprising cells, wherein the wireless communication device (110) is configured for:
receiving, from a location node (120), the location request, including information indicating a first set of cells usable by the wireless communication device (110) when establishing timing advance values, **characterised by**: wherein the first set of cells comprises sub-sets of cells, wherein one sub-set comprises cells that are co-located with the serving cell and all other sub-sets comprise cells that are not co-located with the serving cell but are co-located with other cells in that set, and wherein the information comprises a device specific identification to be used in access requests sent by the wireless communication device (110) to a network node, wherein the access request is used by the network node for timing advance estimation, and wherein each sub-set comprises an indication about whether or not the identification is allowed to be used for the cells of said each sub-set,
determining a second set of cells based on the information, wherein determining a second set of cells based on the information comprises selecting cells that are not co-located, and
establishing the timing advance values for the second set of cells.

9. The wireless communication device (110) according to claim 8, wherein the wireless communication device (110) is configured for determining the second set of cells by determining any additional cells for which timing advance values should be established.

10. The wireless communication device (110) according to claims 8 or 9, wherein the information indicates which cells of the first set of cells are co-located.

11. The wireless communication device (110) according to any one of claims 8-10, wherein the information comprises an indication about quality of service relating to the estimation of the location of the wireless communication device (110).

12. A location node (120) configured for managing a location request relating to estimation of a location of a wireless communication device (110) by means of multi-lateration in a cellular network (100) comprising cells, wherein the location node (120) is configured for:
determining information indicating a first set of cells useable by the wireless communication device (110) when establishing timing advance values, **characterised by**: wherein the first set of cells comprises sub-sets of cells, wherein one sub-set comprises cells that are co-located with the serving cell and all other sub-sets comprise cells that are not co-located with the serving cell but are co-located with other cells in that set, and wherein the information comprises a device specific identification to be used in access requests sent by the wireless communication device (110) to a network node wherein the access request is used by the network node for timing advance estimation, and wherein each sub-set comprises an indication about whether or not the identification is allowed to be used for the cells of said each sub-set; and
sending, to the wireless communication device (110), the location request, including the information.

13. The location node (120) according to claim 12, wherein the information indicates which cells of the first set of cells are co-located.

14. The location node (120) according to any one of claims 12-13, wherein the information comprises an indication about quality of service relating to the estimation of the location of the wireless communication device (110).

## Patentansprüche

1. Verfahren, durchgeführt durch ein drahtloses Kommunikationsgerät (110) zum Verwalten einer Standortanfrage, welche sich auf Schätzung eines Standorts des drahtlosen Kommunikationsgeräts (110) mithilfe von Multilateration in einem Mobilfunknetz (100) bezieht, welches Zellen umfasst, wobei das Verfahren umfasst:
Empfangen (A030), von einem Standortknoten (120), der Standortanfrage, welche Informationen beinhaltet, welche einen ersten Satz von Zellen angeben, welche beim Einrichten von Zeitsteuerungsvorlaufwerten durch das drahtlose Kommunikationsgerät (110) genutzt werden können, **gekennzeichnet durch**:
wobei der erste Satz von Zellen Teilsätze von Zellen umfasst, wobei ein Teilsatz Zellen umfasst, welche mit der aktiven Funkzelle zusammengelegt sind, und alle anderen Teilsätze Zellen umfassen, welche nicht mit der aktiven Funkzelle zusammengelegt sind, aber mit anderen Zellen in diesem Satz zusammengelegt sind, und wobei die Informationen eine gerätespezifische Kennzeichnung umfassen, welche in Zugriffsanfragen genutzt werden, welche durch das drahtlose Kommunikationsgerät (110) an einen Netzwerkknoten gesendet werden, wobei die Zugriffsanfrage durch den Netzwerkknoten zur Schätzung von Zeitsteuerungsvorlauf genutzt wird, und wobei jeder Teilsatz eine Angabe darüber umfasst, ob die Kennzeichnung für die Zellen des jeweiligen Teilsatzes genutzt werden darf oder nicht,
Bestimmen (A040) eines zweiten Satzes von Zellen auf Basis der Informationen, wobei Bestimmen eines zweiten Satzes von Zellen auf Basis der Informationen Auswählen von Zellen umfasst, welche nicht zusammengelegt sind, und
Einrichten (A050) der Zeitsteuerungsvorlaufwerte für den zweiten Satz von Zellen.

2. Verfahren nach Anspruch 1, wobei das Bestimmen des zweiten Satzes von Zellen Bestimmen etwaiger zusätzlicher umfasst, für welche Zeitsteuerungsvorlaufwerte eingerichtet werden müssen.

3. Verfahren nach Anspruch 1 oder 2, wobei die Informationen angeben, welche Zellen des ersten Satzes von Zellen zusammengelegt sind.

4. Verfahren nach einem der vorstehenden Ansprüche, wobei die Informationen eine Angabe über Dienstgüteklasse umfassen, welche sich auf die Schätzung des Standorts des drahtlosen Kommunikationsgeräts (110) bezieht.

5. Verfahren, durchgeführt durch einen Standortknoten (120), zum Verwalten einer Standortanfrage, welche sich auf Schätzung eines Standorts eines drahtlosen Kommunikationsgeräts (110) mithilfe von Multilateration in einem Mobilfunknetz (100) bezieht, welches Zellen umfasst, wobei das Verfahren umfasst:
Bestimmen (A010) von Informationen, welche einen ersten Satz von Zellen angeben, welche beim Einrichten von Zeitsteuerungsvorlaufwerten durch das drahtlose Kommunikationsgerät (110) genutzt werden können, **gekennzeichnet durch**:
wobei der erste Satz von Zellen Teilsätze von Zellen umfasst, wobei ein Teilsatz Zellen umfasst, welche mit der aktiven Funkzelle zusammengelegt sind, und alle anderen Teilsätze Zellen umfassen, welche nicht mit der aktiven Funkzelle zusammengelegt sind, aber mit anderen Zellen in diesem Satz zusammengelegt sind, und wobei die Informationen eine gerätespezifische Kennzeichnung umfasst, welche in Zugriffsanfragen genutzt werden, welche durch das drahtlose Kommunikationsgerät (110) an einen Netzwerkknoten gesendet werden, wobei die Zugriffsanfrage durch den Netzwerkknoten zur Schätzung von Zeitsteuerungsvorlauf genutzt wird, und wobei jeder Teilsatz eine Angabe darüber umfasst, ob die Kennzeichnung für die Zellen des jeweiligen Teilsatzes genutzt werden darf oder nicht; und
Senden (A020) der Standortanfrage, welche die Informationen beinhaltet, an das drahtlose Kommunikationsgerät (110).

6. Verfahren nach Anspruch 5, wobei die Informationen angeben, welche Zellen des ersten Satzes von Zellen zusammengelegt sind.

7. Verfahren nach einem der Ansprüche 5-6, wobei die Informationen eine Angabe über Dienstgüteklasse umfassen, welche sich auf die Schätzung des Standorts des drahtlosen Kommunikationsgeräts (110) bezieht.

8. Drahtloses Kommunikationsgerät (110), welches zum Verwalten einer Standortanfrage konfiguriert ist, welche sich auf Schätzung eines Standorts des drahtlosen Kommunikationsgeräts (110) mithilfe von Multilateration in einem Mobilfunknetz (100) bezieht, welches Zellen umfasst, wobei das drahtlose Kommunikationsgerät (110) konfiguriert ist zum:
Empfangen, von einem Standortknoten (120), der Standortanfrage, welche Informationen beinhaltet, welche einen ersten Satz von Zellen angeben, welche beim Einrichten von Zeitsteuerungsvorlaufwerten durch das drahtlose Kommunikationsgerät (110) genutzt werden können, **gekennzeichnet durch**:
wobei der erste Satz von Zellen Teilsätze von Zellen umfasst, wobei ein Teilsatz Zellen umfasst, welche mit der aktiven Funkzelle zusammengelegt sind, und alle anderen Teilsätze Zellen umfassen, welche nicht mit der aktiven Funkzelle zusammengelegt sind, aber mit anderen Zellen in diesem Satz zusammengelegt sind, und wobei die Informationen eine gerätespezifische Kennzeichnung umfassen, welche in Zugriffsanfragen genutzt werden, welche durch das drahtlose Kommunikationsgerät (110) an einen Netzwerkknoten gesendet werden, wobei die Zugriffsanfrage durch den Netzwerkknoten zur Schätzung von Zeitsteuerungsvorlauf genutzt wird, und wobei jeder Teilsatz eine Angabe darüber umfasst, ob die Kennzeichnung für die Zellen des jeweiligen Teilsatzes genutzt werden darf oder nicht,
Bestimmen eines zweiten Satzes von Zellen auf Basis der Informationen, wobei Bestimmen eines zweiten Satzes von Zellen auf Basis der Informationen Auswählen von Zellen umfasst, welche nicht zusammengelegt sind, und
Einrichten der Zeitsteuerungsvorlaufwerte für den zweiten Satz von Zellen.

9. Drahtloses Kommunikationsgerät (110) nach Anspruch 8, wobei das drahtlose Kommunikationsgerät (110) zum Bestimmen des zweiten Satzes von Zellen durch Bestimmen etwaiger zusätzlicher, für welche Zeitsteuerungsvorlaufwerte eingerichtet werden müssen, konfiguriert ist.

10. Drahtloses Kommunikationsgerät (110) nach Anspruch 8 oder 9, wobei die Informationen angeben, welche Zellen des ersten Satzes von Zellen zusammengelegt sind.

11. Drahtloses Kommunikationsgerät (110) nach einem der Ansprüche 8-10, wobei die Informationen eine Angabe über Dienstgüteklasse umfassen, welche sich auf die Schätzung des Standorts des drahtlosen Kommunikationsgeräts (110) bezieht.

12. Standortknoten (120), welcher zum Verwalten einer Standortanfrage konfiguriert ist, welche sich auf Schätzung eines Standorts eines drahtlosen Kommunikationsgeräts (110) mithilfe von Multilateration in einem Mobilfunknetz (100) bezieht, welches Zellen umfasst, wobei der Standortknoten (120) konfiguriert ist zum:
Bestimmen von Informationen, welche einen ersten Satz von Zellen angeben, welche beim Einrichten von Zeitsteuerungsvorlaufwerten durch das drahtlose Kommunikationsgerät (110) genutzt werden können, **gekennzeichnet durch**:
wobei der erste Satz von Zellen Teilsätze von Zellen umfasst, wobei ein Teilsatz Zellen umfasst, welche mit der aktiven Funkzelle zusammengelegt sind, und alle anderen Teilsätze Zellen umfassen, welche nicht mit der aktiven Funkzelle zusammengelegt sind, aber mit anderen Zellen in diesem Satz zusammengelegt sind, und wobei die Informationen eine gerätespezifische Kennzeichnung umfasst, welche in Zugriffsanfragen genutzt werden, welche durch das drahtlose Kommunikationsgerät (110) an einen Netzwerkknoten gesendet werden, wobei die Zugriffsanfrage durch den Netzwerkknoten zur Schätzung von Zeitsteuerungsvorlauf genutzt wird, und wobei jeder Teilsatz eine Angabe darüber umfasst, ob die Kennzeichnung für die Zellen des jeweiligen Teilsatzes genutzt werden darf oder nicht; und
Senden der Standortanfrage, welche die Informationen beinhaltet, an das drahtlose Kommunikationsgerät (110).

13. Standortknoten(120) nach Anspruch 12, wobei die Informationen angeben, welche Zellen des ersten Satzes von Zellen zusammengelegt sind.

14. Standortknoten (120) nach einem der Ansprüche 12-13, wobei die Informationen eine Angabe über Dienstgüteklasse umfassen, welche sich auf die Schätzung des Standorts des drahtlosen Kommunikationsgeräts (110) bezieht.

## Revendications

1. Procédé, effectué par un dispositif de communication sans fil (110), pour la gestion d'une demande localisation relative à une estimation d'un emplacement du dispositif de communication sans fil (110) au moyen d'une multilatération dans un réseau cellulaire (100), comprenant des cellules, dans lequel le procédé comprend :
la réception (A030), à partir d'un nœud de localisation (120), de la demande de localisation, incluant des informations indiquant un premier ensemble de cellules utilisables par le dispositif de communication sans fil (110) lors de l'établissement de valeurs d'avance de synchronisation, **caractérisé par** :
dans lequel le premier ensemble de cellules comprend des sous-ensembles de cellules, dans lequel un sous-ensemble comprend des cellules qui sont co-localisées avec la cellule de desserte et tous les autres sous-ensembles comprennent des cellules qui ne sont pas co-localisées avec la cellule de desserte mais sont co-localisées avec d'autres cellules dans cet ensemble, et dans lequel les informations comprennent une identification spécifique au dispositif à utiliser dans des demandes d'accès envoyées par le dispositif de communication sans fil (110) à un nœud de réseau, dans lequel la demande d'accès est utilisée par le nœud de réseau pour une estimation d'avance de synchronisation, et dans lequel chaque sous-ensemble comprend une indication concernant si l'identification est ou non autorisée à être utilisée pour les cellules dudit chaque sous-ensemble,
la détermination (A040) d'un second ensemble de cellules sur la base des informations, dans lequel la détermination d'un second ensemble de cellules sur la base des informations comprend la sélection de cellules qui ne sont pas co-localisées, et
l'établissement (A050) des valeurs d'avance de synchronisation pour le second ensemble de cellules.

2. Procédé selon la revendication 1, dans lequel la détermination du second ensemble de cellules comprend la détermination de n'importe quelles cellules additionnelles pour lesquelles des valeurs d'avance de synchronisation devraient être établies.

3. Procédé selon la revendication 1 ou 2, dans lequel les informations indiquent quelles cellules du premier ensemble de cellules sont co-localisées.

4. Procédé selon l'une quelconque des revendications précédentes, dans lequel les informations comprennent une indication sur une qualité de service relative à l'estimation de la localisation du dispositif de communication sans fil (110).

5. Procédé, effectué par un nœud de localisation (120), pour la gestion d'une demande de localisation relative à une estimation d'un emplacement d'un dispositif de communication sans fil (110) au moyen d'une multilatération dans un réseau cellulaire (100), comprenant des cellules, dans lequel le procédé comprend :
la détermination (A010) d'informations indiquant un premier ensemble de cellules utilisables par le dispositif de communication sans fil (110) lors de l'établissement de valeurs d'avance de synchronisation, **caractérisé par** :
dans lequel le premier ensemble de cellules comprend des sous-ensembles de cellules, dans lequel un sous-ensemble comprend des cellules qui sont co-localisées avec la cellule de desserte et tous les autres sous-ensembles comprennent des cellules qui ne sont pas co-localisées avec la cellule de desserte mais sont co-localisées avec d'autres cellules dans cet ensemble, et dans lequel les informations comprennent une identification spécifique au dispositif à utiliser dans des demandes d'accès envoyées par le dispositif de communication sans fil (110) à un nœud de réseau, dans lequel la demande d'accès est utilisée par le nœud de réseau pour une estimation d'avance de synchronisation, et dans lequel chaque sous-ensemble comprend une indication concernant si l'identification est ou non autorisée à être utilisée pour les cellules dudit chaque sous-ensemble ; et
l'envoi (A020), au dispositif de communication sans fil (110), de la demande de localisation, incluant les informations.

6. Procédé selon la revendication 5, dans lequel les informations indiquent quelles cellules du premier ensemble de cellules sont co-localisées.

7. Procédé selon l'une quelconque des revendications 5-6, dans lequel les informations comprennent une indication sur une qualité de service relative à l'estimation de la localisation du dispositif de communication sans fil (110).

8. Dispositif de communication sans fil (110) configuré pour la gestion d'une demande de localisation relative à une estimation d'un emplacement du dispositif de communication sans fil (110) au moyen d'une multilatération dans un réseau cellulaire (100), comprenant des cellules, dans lequel le dispositif de communication sans fil (110) est configuré pour :
recevoir, à partir d'un nœud de localisation (120), la demande de localisation, incluant des informations indiquant un premier ensemble de cellules utilisables par le dispositif de communication sans fil (110) lors de l'établissement de valeurs d'avance de synchronisation, **caractérisé par** :
dans lequel le premier ensemble de cellules comprend des sous-ensembles de cellules, dans lequel un sous-ensemble comprend des cellules qui sont co-localisées avec la cellule de desserte et tous les autres sous-ensembles comprennent des cellules qui ne sont pas co-localisées avec la cellule de desserte mais sont co-localisées avec d'autres cellules dans cet ensemble, et dans lequel les informations comprennent une identification spécifique au dispositif à utiliser dans des demandes d'accès envoyées par le dispositif de communication sans fil (110) à un nœud de réseau, dans lequel la demande d'accès est utilisée par le nœud de réseau pour une estimation d'avance de synchronisation, et dans lequel chaque sous-ensemble comprend une indication concernant si l'identification est ou non autorisée à être utilisée pour les cellules dudit chaque sous-ensemble,
déterminer un second ensemble de cellules sur la base des informations, dans lequel la détermination d'un second ensemble de cellules sur la base des informations comprend la sélection de cellules qui ne sont pas co-localisées, et
établir les valeurs d'avance de synchronisation pour le second ensemble de cellules.

9. Dispositif de communication sans fil (110) selon la revendication 8, dans lequel le dispositif de communication sans fil (110) est configuré pour déterminer le second ensemble de cellules en déterminant n'importe quelles cellules additionnelles pour lesquelles des valeurs d'avance de synchronisation devraient être établies.

10. Dispositif de communication sans fil (110) selon les revendications 8 ou 9, dans lequel les informations indiquent quelles cellules du premier ensemble de cellules sont co-localisées.

11. Dispositif de communication sans fil (110) selon l'une quelconque des revendications 8-10, dans lequel les informations comprennent une indication sur une qualité de service relative à l'estimation de la localisation du dispositif de communication sans fil (110).

12. Nœud de localisation (120) configuré pour la gestion d'une demande de localisation relative à une estimation d'un emplacement d'un dispositif de communication sans fil (110) au moyen d'une multilatération dans un réseau cellulaire (100), comprenant des cellules, dans lequel le nœud de localisation (120) est configuré pour :
déterminer des informations indiquant un premier ensemble de cellules utilisables par le dispositif de communication sans fil (110) lors de l'établissement de valeurs d'avance de synchronisation, **caractérisé par** :
dans lequel le premier ensemble de cellules comprend des sous-ensembles de cellules, dans lequel un sous-ensemble comprend des cellules qui sont co-localisées avec la cellule de desserte et tous les autres sous-ensembles comprennent des cellules qui ne sont pas co-localisées avec la cellule de desserte mais sont co-localisées avec d'autres cellules dans cet ensemble, et dans lequel les informations comprennent une identification spécifique au dispositif à utiliser dans des demandes d'accès envoyées par le dispositif de communication sans fil (110) à un nœud de réseau, dans lequel la demande d'accès est utilisée par le nœud de réseau pour une estimation d'avance de synchronisation, et dans lequel chaque sous-ensemble comprend une indication concernant si l'identification est ou non autorisée à être utilisée pour les cellules dudit chaque sous-ensemble ; et
envoyer, au dispositif de communication sans fil (110), la demande de localisation, incluant les informations.

13. Nœud de localisation (120) selon la revendication 12, dans lequel les informations indiquent quelles cellules du premier ensemble de cellules sont co-localisées.

14. Nœud de localisation (120) selon l'une quelconque des revendications 12-13, dans lequel les informations comprennent une indication sur une qualité de service relative à l'estimation de la localisation du dispositif de communication sans fil (110).
